# EUROPEAN PATENT SPECIFICATION

(11) **EP 4 368 654 B1**
(45) Date of publication and mention of the grant of the patent: **21.10.2026**
(21) Application number: 22837588.7
(22) Date of filing: 30.06.2022
(51) Int. Cl.: C08G 65/336, C08L 71/02, C08K 3/013

(54) **MULTI-PART CURABLE COMPOSITION**
MEHRTEILIGE HÄRTBARE ZUSAMMENSETZUNG
COMPOSITION DURCISSABLE EN PLUSIEURS PARTIES

(30) Priority: 09.07.2021 JP 2021114430
(43) Date of publication of application: 15.05.2024
(73) Proprietor: Kaneka Corporation, Osaka-shi, Osaka 530-8288 (JP)
(72) Inventor: MIYAFUJI, Kiyoshi, Takasago-shi, Hyogo 676-8688 (JP)
(74) Representative: Vossius & Partner Patentanwälte Rechtsanwälte mbB
(86) International application number: PCT/JP2022/026228
(87) International publication number: WO 2023/282172

(56) References cited:
- WO-A1-2017/057719
- WO-A1-2021/059972
- JP-A- 2015 105 324
- JP-A- 2015 172 119
- JP-A- H08 283 589

## Description

### Technical Field

The present invention relates to a multi-part curable composition and a cured product obtained by curing the composition.

### Background Art

A polyoxyalkylene polymer that has a silicon group having a hydroxy or hydrolyzable group on a silicon atom and capable of forming a siloxane bond through a hydrolysis-condensation reaction (this silicon group may be hereinafter referred to as a "reactive silicon group") is known to cure into a rubber-like cured product under the effect of moisture contained in an ambient environment. Due to its physical properties, the polymer is used as an adhesive, a sealing material, or a filler.

The progress of a curing reaction of a moisture-curable composition containing the polymer is dependent on the moisture content in the air, and curing of the composition applied to any object starts from the surface of the applied composition. Thus, this kind of composition has insufficient depth curability.

It has been reported that a two-part composition including a main part containing a reactive silicon group-containing organic polymer and an auxiliary part containing water exhibits improved depth curability (see Patent Literature 1, for example). PTL2 teaches multicomponent curable composition used as sealing material, comprising component containing polyoxyalkylene polymer including reactive silicon group and epoxy resin curing agent including tertiary amine, and component containing epoxy resin wherein the multi-component curable composition has low viscosity before curing, and excellent rigidity after curing.

### Citation List

### Patent Literature

PTL 1: Japanese Laid-Open Patent Application Publication No. H8-231855 PTL 2: WO 2021/059972 A1

### Summary of Invention

### Technical Problem

In the two-part composition as mentioned above, the water-containing auxiliary part desirably further contains a curable resin and/or a plasticizer for good mixing of the main and auxiliary parts. However, the auxiliary part containing a curable resin and/or a plasticizer lacks stability, and the components of the auxiliary part tend to separate from one another.

When adhesive joining is performed in a line production system for a continuous process such as assembly of industrial products, the adhesive is required to exhibit a certain level of initial strength within a short time and ensure early fixing between the adherends.

It is also required that after a main part and an auxiliary part are mixed, the mixture should resist becoming viscous and remain usable for a long period of time.

In view of the above circumstances, the present invention aims to provide a multi-part curable composition including a main part containing a reactive silicon group-containing polyoxyalkylene polymer and an auxiliary part containing water, the auxiliary part having high stability, the main part and the auxiliary part being mixable to give a mixture that remains usable for a long period of time after the mixing and that quickly exhibits a sufficient initial strength.

### Solution to Problem

As a result of intensive studies with the goal of solving the above problem, the present inventors have found that a composition including a main part containing a reactive silicon group-containing polyoxyalkylene polymer and an auxiliary part containing water can be a solution to the problem when the auxiliary part further contains at least one of a reactive silicon group-containing polyoxyalkylene polymer and a plasticizer together with a certain proportion of inorganic filler, and the reactive silicon group-containing polyoxyalkylene polymer contained in the main part has a particular structure. Based on this finding, the inventors have completed the present invention.

Specifically, the present invention relates to a multi-part curable composition including an A part and a B part, wherein: the A part contains a polyoxyalkylene polymer (A) having more than one reactive silicon groups on average per terminal moiety of the polyoxyalkylene polymer (A), the reactive silicon groups being represented by the following formula (1): -SiX₃ (1), wherein X is a hydroxy group or a hydrolyzable group; the A part further comprises a silanol condensation catalyst (C), the B part contains at least one of a polyoxyalkylene polymer (P) having a reactive silicon group and a plasticizer (D), an inorganic filler (E), and water (F); and a percentage of the inorganic filler (E) in a total amount of the B part is 10 wt% or more.

### Advantageous Effects of Invention

The present invention can provide a multi-part curable composition including a main part containing a reactive silicon group-containing polyoxyalkylene polymer and an auxiliary part containing water, the auxiliary part having high stability, the main part and the auxiliary part being mixable to give a mixture that remains usable for a long period of time after the mixing and that quickly exhibits a sufficient initial strength.

### Description of Embodiments

Hereinafter, an embodiment of the present invention will be described in detail. The present invention is not limited to the embodiment described below.

The present embodiment is a multi-part curable composition including an A part and a B part.

The A part essentially contains a polyoxyalkylene polymer (A) having more than one reactive silicon groups on average per terminal moiety of the polyoxyalkylene polymer (A), the reactive silicon groups being represented by a given formula. The A part further comprises a silanol condensation catalyst (C).

The B part essentially contains: at least one of a polyoxyalkylene polymer (P) having a reactive silicon group and a plasticizer (D); an inorganic filler (E); and water (F). The percentage of the inorganic filler (E) in the total amount of the B part is 10 wt% or more. The curable composition according to the present embodiment does not contain any epoxy resin.

### <<Polyoxyalkylene Polymer (A) Having Reactive Silicon Groups>>

### <Reactive Silicon Groups>

The polyoxyalkylene polymer (A) has reactive silicon groups. The term "reactive silicon group" refers to a silicon group having a hydroxy or hydrolyzable group on a silicon atom and capable of forming a siloxane bond through a hydrolysis-condensation reaction.

In the present embodiment, the reactive silicon groups of the polyoxyalkylene polymer (A) have one silicon atom to which three hydroxy or hydrolyzable groups are attached, and are represented by the following formula (1).

-SiX₃ (1)

In this formula, X is a hydroxy group or a hydrolyzable group.

The use of the reactive silicon groups having the particular structure as shown above offers the following advantages: the time taken for a mixture of the A part and the B part to become viscous and unsuitable for use (application) after mixing of the A part and the B part, namely, the time for which the mixture remains usable after the mixing, can be made relatively long; and the mixture can quickly exhibit a sufficient initial strength when used for joining purposes.

Examples of X include a hydroxy group, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Methoxy and ethoxy groups are particularly preferred. The X groups may be the same or different.

Specific examples of the reactive silicon groups of the polyoxyalkylene polymer (A) include, but are not limited to, trimethoxysilyl, triethoxysilyl, tris(2-propenyloxy)silyl, and triacetoxysilyl groups. Among these, trimethoxysilyl and triethoxysilyl groups are preferred to obtain a cured product having high stiffness, and trimethoxysilyl groups are more preferred.

In the present embodiment, the polyoxyalkylene polymer (A) has more than one reactive silicon groups on average per terminal moiety of the polyoxyalkylene polymer (A). This offers the advantages of ensuring that the time for which the mixture of the A part and the B part remains usable after the mixing is relatively long and allowing the mixture to quickly exhibit a sufficient initial strength when used for joining purposes.

Another advantage is that the time allowed for bonding operation can be lengthened; specifically, in the case where the mixture of the main part and the auxiliary part is applied to a substrate and then an adherend is bonded to the substrate, the mixture can exhibit good bond performance even if a certain period of time elapses between the application of the mixture to the substrate and the placement of the adherend onto the substrate.

The phrase "having more than one reactive silicon groups on average per terminal moiety" means that the polyoxyalkylene polymer (A) includes a polyoxyalkylene having two or more reactive silicon groups in one terminal moiety. That is, the polyoxyalkylene polymer (A) may consist solely of a polyoxyalkylene having two or more reactive silicon groups in one terminal moiety or may include both a polyoxyalkylene having two or more reactive silicon groups in one terminal moiety and a polyoxyalkylene having one reactive silicon group in one terminal moiety. The terminal moieties of one polyoxyalkylene molecule may include both a terminal moiety having two or more reactive silicon groups and a terminal moiety having one reactive silicon group. The polyoxyalkylene polymer (A) may include a polyoxyalkylene having a terminal moiety having no reactive silicon group, although the polyoxyalkylene polymer (A) as a whole has more than one reactive silicon groups on average per terminal moiety.

The terminal moiety having two or more reactive silicon groups can be represented, for example, by the following formula (2).

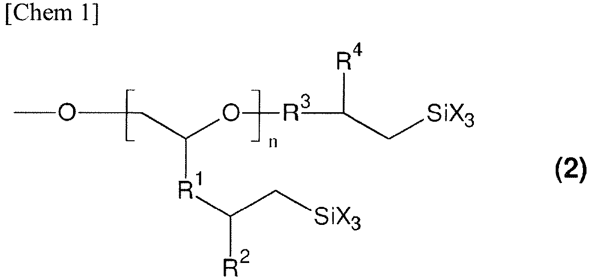

In this formula, R¹ and R³ are each independently a divalent linkage group having 1 to 6 carbon atoms, atoms of R¹ and R³ that are attached to carbon atoms adjacent to R¹ and R³ are each independently carbon, oxygen, or nitrogen, R² and R⁴ are each independently hydrogen or a hydrocarbon group having 1 to 10 carbon atoms, n is an integer from 1 to 10, and X is as defined above for the formula (1).

R¹ and R³ may each independently be a divalent organic group having 1 to 6 carbon atoms or a hydrocarbon group optionally containing an oxygen atom. The number of carbon atoms in the hydrocarbon group is preferably from 1 to 4, more preferably from 1 to 3, and even more preferably 1 or 2. Specific examples of R¹ include -CH₂OCH₂-, -CH₂O-, and -CH₂-, and R¹ is preferably -CH₂OCH₂-. Specific examples of R³ include -CH₂- and -CH₂CH₂-, and R³ is preferably -CH₂-.

The number of carbon atoms in the hydrocarbon groups represented by R² and R⁴ is preferably from 1 to 5, more preferably from 1 to 3, and even more preferably 1 or 2. Specific examples of R² and R⁴ include a hydrogen atom, a methyl group, and an ethyl group, and R² and R⁴ are preferably hydrogen atoms or methyl groups and more preferably hydrogen atoms.

In a particularly preferred aspect, the terminal moiety represented by the formula (2) contains -CH₂OCH₂- as R¹, -CH₂- as R³, and hydrogen atoms as R² and R⁴. The integer n is preferably from 1 to 5, more preferably from 1 to 3, and even more preferably 1 or 2. It should be noted that n is not limited to one value, and there may be terminal moieties having different values of n.

The polyoxyalkylene polymer (A) has more than 1.0 reactive silicon groups on average per terminal moiety. The average number is more preferably 1.1 or more, even more preferably 1.5 or more, and still even more preferably 2.0 or more. The average number is preferably 5 or less and more preferably 3 or less.

In the polyoxyalkylene polymer (A), the number of terminal moieties having more than one reactive silicon groups is preferably 0.5 or more, more preferably 1.0 or more, even more preferably 1.1 or more, and still even more preferably 1.5 or more on average per molecule. The average number is preferably 4 or less and more preferably 3 or less.

The polyoxyalkylene polymer (A) may have a reactive silicon group in a site other than the terminal moieties. However, it is preferable that the polyoxyalkylene polymer (A) should have reactive silicon groups only in the terminal moieties, because in this case a rubbery cured product having high elongation and low elastic modulus is likely to be obtained.

In the polyoxyalkylene polymer (A), the average number of reactive silicon groups per molecule is preferably more than 1.0, more preferably 1.2 or more, even more preferably 1.3 or more, still even more preferably 1.5 or more, and particularly preferably 1.7 or more in terms of the strength of the resulting cured product. In terms of elongation of the cured product, the average number is preferably 6.0 or less, more preferably 5.5 or less, and most preferably 5.0 or less.

### <Main Chain Structure>

The polyoxyalkylene polymer (A) is not limited to having a particular backbone, and examples of the backbone of the polyoxyalkylene polymer (A) include polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The number-average molecular weight of the polyoxyalkylene polymer (A), as determined by GPC analysis as a polystyrene equivalent molecular weight, is preferably from 3,000 to 100,000, more preferably from 3,000 to 50,000, and particularly preferably from 3,000 to 30,000. If the number-average molecular weight is less than 3,000, the amount of introduced reactive silicon groups is large, and this could be disadvantageous in terms of production cost. If the number-average molecular weight is more than 100,000, the polymer has a high viscosity, which tends to be disadvantageous in terms of workability.

The molecular weight of the polyoxyalkylene polymer (A) can be expressed also as a terminal group equivalent molecular weight. The terminal group equivalent molecular weight is determined as follows: before introduction of reactive silicon groups, an organic polymer precursor is subjected to titration analysis based on the principles of the hydroxy value measurement method as specified in JIS K 1557 and the iodine value measurement method as specified in JIS K 0070 to directly measure the terminal group concentration, from which the terminal group equivalent molecular weight is calculated taking into account the architecture of the organic polymer (in particular, the degree of branching which depends on the polymerization initiator used). The terminal group equivalent molecular weight of the polyoxyalkylene polymer (A) can be determined also by creating a calibration curve representing the relationship between the number-average molecular weight of the organic polymer precursor as determined by common GPC analysis and the terminal group equivalent molecular weight, determining the number-average molecular weight of the polyoxyalkylene polymer (A) by GPC analysis, and converting the determined number-average molecular weight to the terminal group equivalent molecular weight based on the calibration curve.

The polyoxyalkylene polymer (A) is not limited to having a particular molecular weight distribution (Mw/Mn), but preferably has a narrow molecular weight distribution. Specifically, the dispersity Mw/Mn is preferably less than 2.0, more preferably 1.6 or less, even more preferably 1.5 or less, and particularly preferably 1.4 or less. In terms of improving various mechanical properties such as durability and elongation of the cured product, the dispersity Mw/Mn is preferably 1.2 or less. The molecular weight distribution of the polyoxyalkylene polymer (A) can be determined from the number-average molecular weight and weight-average molecular weight obtained by GPC analysis.

The main chain structure of the polyoxyalkylene polymer (A) may be linear or branched. The main chain structure of the polyoxyalkylene polymer (A) is preferably linear in order to further lengthen the time for which the mixture of the A part and the B part remains usable after the mixing.

### <Method for Synthesizing Polyoxyalkylene Polymer (A)>

Hereinafter, how to synthesize the polyoxyalkylene polymer (A) will be described.

The polyoxyalkylene polymer (A) having more than 1.0 reactive silicon groups on average per terminal moiety is preferably obtained by introducing two or more unsaturated carbon-carbon bonds into one terminal hydroxy moiety of a hydroxy-terminated polymer resulting from polymerization and then reacting a reactive silicon group-containing compound with the introduced unsaturated carbon-carbon bonds. The following describes this synthesis method.

### (Polymerization)

The synthesis of the polyoxyalkylene polymer (A) is preferably carried out using a method in which an epoxy compound is polymerized with a hydroxy group-containing initiator by means of a double metal cyanide complex catalyst such as zinc hexacyanocobaltate-glyme complex.

Examples of the hydroxy group-containing initiator include compounds containing one or more hydroxy groups, such as ethylene glycol, propylene glycol, glycerin, pentaerythritol, low-molecular-weight polyoxypropylene glycol, polyoxypropylene triol, allyl alcohol, polyoxypropylene monoallyl ether, and polyoxypropylene monoalkyl ether.

Examples of the epoxy compound include alkylene oxides such as ethylene oxide and propylene oxide and glycidyl ethers such as methyl glycidyl ether and allyl glycidyl ether. Among these, propylene oxide is preferred.

### (Introduction of Unsaturated Carbon-Carbon Bonds)

The introduction of two or more unsaturated carbon-carbon bonds into one terminal moiety is preferably accomplished using a method in which an alkali metal salt is allowed to act on the hydroxy-terminated polymer and thereafter the polymer is reacted first with an unsaturated carbon-carbon bond-containing epoxy compound and then with an unsaturated carbon-carbon bond-containing halogenated hydrocarbon compound. With the use of this method, the molecular weight and molecular weight distribution of the polymer main chain can be controlled by adjusting the polymerization conditions, and at the same time the reactive groups can be introduced efficiently and reliably.

The alkali metal salt is preferably sodium hydroxide, sodium methoxide, sodium ethoxide, potassium hydroxide, potassium methoxide, or potassium ethoxide and more preferably sodium methoxide or potassium methoxide. Sodium methoxide is particularly preferred in terms of availability.

The temperature at which the alkali metal salt is allowed to act on the hydroxy-terminated polymer is preferably from 50 to 150°C and more preferably from 110 to 140°C. The time for which the alkali metal salt is allowed to act on the hydroxy-terminated polymer is preferably from 10 minutes to 5 hours and more preferably from 30 minutes to 3 hours.

A compound represented by the following formula (3) is particularly suitable for use as the unsaturated carbon-carbon bond-containing epoxy compound (R¹ and R² in the formula are as defined above).

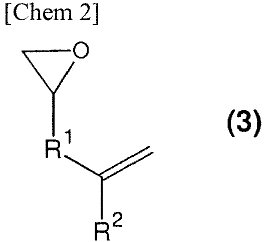

Specifically, allyl glycidyl ether, methallyl glycidyl ether, glycidyl acrylate, glycidyl methacrylate, butadiene monoxide, and 1,4-cyclopentadiene monoepoxide are preferred in terms of reaction activity, and allyl glycidyl ether is particularly preferred.

The amount of the unsaturated carbon-carbon bond-containing epoxy compound to be added can be freely chosen taking into account the amount of the unsaturated carbon-carbon bonds to be introduced into the polymer and the reactivity of the epoxy compound with the polymer. In particular, the molar ratio of the epoxy compound to the hydroxy groups of the hydroxy-terminated polymer is preferably 0.2 or more and more preferably 0.5 or more. The molar ratio is preferably 5.0 or less and more preferably 2.0 or less.

The reaction temperature at which the hydroxy group-containing polymer is subjected to a ring-opening addition reaction with the unsaturated carbon-carbon bond-containing epoxy compound is preferably from 60 to 150°C and more preferably from 110 to 140°C.

Examples of the unsaturated carbon-carbon bond-containing halogenated hydrocarbon compound include vinyl chloride, allyl chloride, methallyl chloride, vinyl bromide, allyl bromide, methallyl bromide, vinyl iodide, allyl iodide, and methallyl iodide. In terms of ease of handling, it is more preferable to use allyl chloride or methallyl chloride.

The amount of the unsaturated carbon-carbon bond-containing halogenated hydrocarbon compound to be added is not limited to a particular range. The molar ratio of the halogenated compound to the hydroxy groups of the hydroxy-terminated polymer is preferably 0.7 or more and more preferably 1.0 or more. The molar ratio is preferably 5.0 or less and more preferably 2.0 or less.

The temperature at which the unsaturated carbon-carbon bond-containing halogenated hydrocarbon compound is reacted with the hydroxy-terminated polymer is preferably from 50 to 150°C and more preferably from 110 to 140°C. The reaction time is preferably from 10 minutes to 5 hours and more preferably from 30 minutes to 3 hours.

### (Introduction of Reactive Silicon Groups)

The method for introducing reactive silicon groups is not limited to a particular technique, and known methods can be used. The following are examples of the introduction method.
(i) Method in which a hydrosilane compound is added to an unsaturated carbon-carbon bond-containing polymer by a hydrosilylation reaction.
(ii) Method in which an unsaturated carbon-carbon bond-containing polymer is reacted with a compound having both a group capable of reacting with the unsaturated carbon-carbon bond to form a bond and a reactive silicon group (this compound is also referred to as a "silane coupling agent"). For example, the group capable of reacting with the unsaturated carbon-carbon bond to form a bond is, but not limited to, a mercapto group.
(iii) Method in which a reactive group-containing polymer is reacted with a silane coupling agent. Examples of the combination of the reactive group of the reactive group-containing polymer and the reactive group of the silane coupling agent include, but are not limited to, a combination of a hydroxy group and an isocyanate group, a combination of a hydroxy group and an epoxy group, a combination of an amino group and an isocyanate group, a combination of an amino group and a thioisocyanate group, a combination of an amino group and an epoxy group, a combination of an amino group and an α,β-unsaturated carbonyl group (Michael addition reaction), a combination of a carboxy group and an epoxy group, and a combination of an unsaturated bond and a mercapto group.

The method (i) is preferred since the reaction is easy to conduct, the amount of the reactive silicon groups to be introduced can be adjusted, and the resulting reactive silicon group-containing polyoxyalkylene polymer (A) has stable physical properties. The methods (ii) and (iii) are preferred since these methods permit a wide choice of reactions and allow the degree of reactive silicon group introduction to be easily increased.

Examples of the hydrosilane compound that can be used in the method (i) include, but are not limited to, trimethoxysilane, triethoxysilane, tris(2-propenyloxy)silane, and triacetoxysilane.

As for the amount of the hydrosilane compound used, the molar ratio of the compound to the unsaturated carbon-carbon bonds of the precursor polymer (the number of moles of hydrosilane/the number of moles of unsaturated carbon-carbon bonds) is preferably from 0.05 to 10 in terms of reactivity and more preferably from 0.3 to 2 in terms of economy.

The hydrosilylation reaction can be accelerated by using a catalyst. The hydrosilylation catalyst used may be any of known catalysts such as various complexes of cobalt, nickel, iridium, platinum, palladium, rhodium, and ruthenium. Examples of the catalyst that can be used include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinyl siloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄. The use of a platinum catalyst such as chloroplatinic acid or a platinum-vinyl siloxane complex is preferred in terms of reaction efficiency.

Examples of the silane coupling agent that can be used in the method (ii) or (iii) include: mercaptosilanes reactive with unsaturated bonds, such as 3-mercaptopropyltrimethoxysilane, 3-mercaptopropyltriethoxysilane, and mercaptomethyltriethoxysilane; isocyanatosilanes reactive with hydroxy groups, such as 3-isocyanatopropyltrimethoxysilane, 3-isocyanatopropyltriethoxysilane, isocyanatomethyltrimethoxysilane, and isocyanatomethyltriethoxysilane; epoxysilanes reactive with hydroxy, amino, or carboxy groups, such as 3-glycidoxypropyltrimethoxysilane, 3-glycidoxypropyltriethoxysilane, glycidoxymethyltrimethoxysilane, and glycidoxymethyltriethoxysilane; aminosilanes reactive with isocyanate or thioisocyanate groups, such as 3-aminopropyltrimethoxysilane, 3-aminopropyltriethoxysilane, 3-(2-aminoethyl)propyltrimethoxysilane, 3-(2-aminoethyl)propyltriethoxysilane, 3-(*N*-ethylamino)-2-methylpropyltrimethoxysilane, 3-ureidopropyltrimethoxysilane, 3-ureidopropyltriethoxysilane, N-phenyl-3-aminopropyltrimethoxysilane, N-benzyl-3-aminopropyltrimethoxysilane, N-cyclohexylaminomethyltriethoxysilane, N-phenylaminomethyltrimethoxysilane, (2-aminoethyl)aminomethyltrimethoxysilane, N,N'-bis[3-(trimethoxysilyl)propyl]ethylenediamine, and bis(3-(trimethoxysilyl)propyl)amine; and hydroxyalkylsilanes such as 3-hydroxypropyltrimethoxysilane and hydroxymethyltriethoxysilane.

The main chain of the polyoxyalkylene polymer (A) may contain an ester bond or an amide segment represented by the following formula (4) insofar as the effect of the present invention is not impaired.

-NR⁶-C(=O)- (4)

In this formula, R⁶ is an organic group having 1 to 10 carbon atoms or a hydrogen atom.

A cured product obtained from a curable composition including the polyoxyalkylene polymer (A) containing an ester bond or an amide segment can have high hardness and high strength thanks to the action of hydrogen bonds. However, the polyoxyalkylene polymer (A) containing an amide segment could be cleaved by heat or any other cause. Additionally, the curable composition including the polyoxyalkylene polymer (A) containing an amide segment tends to have a high viscosity. A polyoxyalkylene containing an amide segment may be used as the polyoxyalkylene polymer (A) in view of the above advantages, or a polyoxyalkylene free of any amide segment may be used as the polymer (A) in view of the above disadvantages.

Examples of the amide segment represented by the formula (4) include an amide segment formed by a reaction between an isocyanate group and a hydroxy group, an amide segment formed by a reaction between an amino group and a carbonate, an amide segment formed by a reaction between an isocyanate group and an amino group, and an amide segment formed by a reaction between an isocyanate group and a mercapto group. A segment formed by a reaction between an amide segment containing an active hydrogen atom and an isocyanate group is also classified as the amide segment represented by the formula (4).

An example of the method for producing the amide segment-containing polyoxyalkylene polymer (A) is a method in which a polyoxyalkylene terminated by an active hydrogen-containing group is reacted with an excess of polyisocyanate compound to synthesize a polymer terminated by an isocyanate group and after or simultaneously with the synthesis, the Z group of a silicon compound represented by the following formula (5) is reacted with all or part of the isocyanate groups of the synthesized polymer.

Z-R⁷-SiRX₃ (5)

In this formula, X is as defined above, R⁷ is a divalent organic group and preferably a divalent hydrocarbon group having 1 to 20 carbon atoms, Z is a hydroxy, carboxy, mercapto, or primary or secondary amino group.

Examples of the silicon compound represented by the formula (5) include, but are not limited to: amino group-containing silanes such as γ-aminopropyltrimethoxysilane, *N*-(β-aminoethyl)-γ-aminopropyltrimethoxysilane, (N-phenyl)-γ-aminopropyltrimethoxysilane, and *N*-ethylaminoisobutyltrimethoxysilane; hydroxy group-containing silanes such as γ-hydroxypropyltrimethoxysilane; and mercapto group-containing silanes such as γ-mercaptopropyltrimethoxysilane and mercaptomethyltriethoxysilane. Additionally, as described in Japanese Laid-Open Patent Application Publication No. H6-211879 (U.S. Patent No. 5364955), Japanese Laid-Open Patent Application Publication No. H10-53637 (U.S. Patent No. 5756751), Japanese Laid-Open Patent Application Publication No. H10-204144 (EP 0831108), Japanese Laid-Open Patent Application Publication No. 2000-169544, and Japanese Laid-Open Patent Application Publication No. 2000-169545, a product of a Michael addition reaction between any of various α,β-unsaturated carbonyl compounds and any of various primary amino group-containing silanes or a product of a Michael addition reaction between any of various (meth)acryloyl group-containing silanes and any of various primary amino group-containing compounds can also be used as the silicon compound represented by the formula (5).

Another example of the method for producing the amide segment-containing polyoxyalkylene polymer (A) is a method in which a polyoxyalkylene terminated by an active hydrogen-containing group is reacted with a reactive silicon group-containing isocyanate compound represented by the following formula (6).

O=C=N-R⁷-SiX₃ (6)

In this formula, R⁷ and X are as defined above.

Examples of the reactive silicon group-containing isocyanate compound represented by the formula (6) include, but are not limited to, γ-trimethoxysilylpropyl isocyanate, γ-triethoxysilylpropyl isocyanate, trimethoxysilylmethyl isocyanate, and triethoxymethylsilylmethyl isocyanate.

In the case where the polyoxyalkylene polymer (A) contains amide segments, the number of the amide segments per molecule of the polyoxyalkylene polymer (A) (the average number of the amide segments) is preferably from 1 to 10, more preferably from 1.5 to 5, and particularly preferably from 2 to 3. If the average number of the amide segments is less than 1, this could lead to insufficient curability. If the average number is more than 10, the polyoxyalkylene polymer (A) could have a high viscosity and be difficult to handle. In order to reduce the viscosity of the curable composition and improve the workability of the curable composition, it is preferable for the polyoxyalkylene polymer (A) to be free of any amide segment.

### <<Reactive Silicon Group-Containing (Meth)acrylic Ester Polymer (B)>>

The A part may contain a reactive silicon group-containing (meth)acrylic ester polymer (B) (hereinafter also referred to as "(meth)acrylic ester polymer (B)") in addition to the reactive silicon group-containing polyoxyalkylene polymer (A). The (meth)acrylic ester polymer (B) is an optional component and need not be contained in the A part.

The (meth)acrylic ester monomer for forming the main chain of the (meth)acrylic ester polymer (B) is not limited to a particular type, and various monomers can be used. Specific examples include (meth)acrylic monomers such as methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-pentyl (meth)acrylate, *n*-hexyl (meth)acrylate, cyclohexyl (meth)acrylate, *n*-heptyl (meth)acrylate, *n*-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, (3-trimethoxysilyl)propyl (meth)acrylate, (3-dimethoxymethylsilyl)propyl (meth)acrylate, (2-trimethoxysilyl)ethyl (meth)acrylate, (2-dimethoxymethylsilyl)ethyl (meth)acrylate, trimethoxysilylmethyl (meth)acrylate, (dimethoxymethylsilyl)methyl (meth)acrylate, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The (meth)acrylic ester polymer (B) has reactive silicon groups represented by the formula (1) given above. The reactive silicon groups of the (meth)acrylic ester polymer (B) may be the same as or different from those of the polyoxyalkylene polymer (A).

Specific examples of the reactive silicon groups of the (meth)acrylic ester polymer (B) include, but are not limited to, trimethoxysilyl, triethoxysilyl, tris(2-propenyloxy)silyl, and triacetoxysilyl groups. Among these, trimethoxysilyl and triethoxysilyl groups are more preferred to obtain a cured product having a high Young's modulus, and trimethoxysilyl groups are even more preferred.

The reactive silicon group amount in the (meth)acrylic ester polymer (B) is not limited to a particular range, but is preferably 0.1 mmol/g or more, more preferably 0.5 mmol/g or more, and even more preferably 0.6 mmol/g or more. The reactive silicon group amount is preferably 2.0 mmol/g or less. To prevent reduced elongation of the resulting cured product, the reactive silicon group amount is more preferably 1.0 mmol/g or less. To obtain a high-stiffness cured product having a high Young's modulus, the reactive silicon group amount is particularly preferably from 0.6 to 1.0 mmol/g.

To achieve a high strength, the (meth)acrylic ester polymer (B) preferably contains 40 wt% or more of an alkyl (meth)acrylate whose alkyl has 1 to 3 carbon atoms in the total monomers of the (meth)acrylic ester polymer (B).

The number-average molecular weight of the (meth)acrylic ester polymer (B) is not limited to a particular range. The number-average molecular weight of the (meth)acrylic ester polymer (B), as determined by GPC analysis as a polystyrene equivalent molecular weight, is preferably from 500 to 50,000, more preferably from 500 to 30,000, and particularly preferably from 1,000 to 10,000.

Methods for blending the (meth)acrylic ester polymer (B) and the polyoxyalkylene polymer (A) are proposed, for example, in Japanese Laid-Open Patent Application Publication No. S59-122541, Japanese Laid-Open Patent Application Publication No. S63-112642, Japanese Laid-Open Patent Application Publication No. H6-172631, and Japanese Laid-Open Patent Application Publication No. H11-116763. An alternative method is to polymerize a (meth)acrylic ester monomer in the presence of a polyoxypropylene polymer having reactive silicon groups.

In the case of using the (meth)acrylic ester polymer (B), the weight ratio (A):(B) between the polyoxyalkylene polymer (A) and the (meth)acrylic ester polymer (B) is preferably from 95:5 to 50:50. That is, the percentage of the polymer (A) is preferably from 50 to 95 wt%. When the percentage of the polymer (A) is in this range, a cured product having flexibility and high shear bond strength can be obtained.

### <<Polyoxyalkylene Polymer (P)>>

The polyoxyalkylene polymer (P) having a reactive silicon group may be contained in the B part. When the polyoxyalkylene polymer (P) is contained in the B part, it is easy to mix the A part and the B part. The B part may contain both the plasticizer (D) and the polymer (P). In the case where the B part contains the plasticizer (D), the B part need not contain the polymer (P).

The reactive silicon group-containing polyoxyalkylene polymer (P) may be one that falls within the definition of the reactive silicon group-containing polyoxyalkylene polymer (A) described above or may be one that does not fall within the definition of the polymer (A). The polymer (A) contained in the A part and the polymer (P) contained in the B part may be the same polymer or different polymers.

The reactive silicon group of the polyoxyalkylene polymer (P) has one silicon atom to which 1 to 3 hydroxy or hydrolyzable groups are attached, and can be represented by the following formula (7).

-SiR⁵₃₋ₐYₐ (7)

In this formula, R⁵ is a substituted or unsubstituted hydrocarbon group having 1 to 20 carbon atoms, Y is a hydroxy group or a hydrolyzable group, and a is 1, 2, or 3.

The number of carbon atoms in the hydrocarbon group represented by R⁵ is preferably from 1 to 10, more preferably from 1 to 5, and even more preferably from 1 to 3. Specific examples of R⁵ include: alkyl groups such as methyl and ethyl groups; alkyl groups having a heteroatom-containing group, such as chloromethyl, methoxymethyl, and 3,3,3-trifluoropropyl groups; cycloalkyl groups such as cyclohexyl groups; aryl groups such as phenyl groups; and aralkyl groups such as benzyl groups. R⁵ is preferably an alkyl group or an alkyl group having a heteroatom-containing group, more preferably a methyl group, an ethyl group, a chloromethyl group, or a methoxymethyl group, even more preferably a methyl group or an ethyl group, and particularly preferably a methyl group. In the case where the reactive silicon group contains two or more R⁵ groups, the R⁵ groups may be the same or different.

Specific examples of Y are the same as the specific examples of X described above and will therefore not be mentioned below. In terms of moderate hydrolyzability and ease of handling, Y is preferably an alkoxy group, more preferably a methoxy group or an ethoxy group, and particularly preferably a methoxy group. In the case where the reactive silicon group contains two or more Y groups, the Y groups may be the same or different.

The letter a is an integer of 1, 2, or 3 and preferably 2 or 3. To achieve a significant effect in preventing gelation of the B part during storage, a is particularly preferably 2.

Examples of the reactive silicon group of the polyoxyalkylene polymer (P) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, dimethoxyphenylsilyl, (chloromethyl)dimethoxysilyl, (chloromethyl)diethoxysilyl, (methoxymethyl)dimethoxysilyl, (methoxymethyl)diethoxysilyl, (*N,N-*diethylaminomethyl)dimethoxysilyl, and (*N,N*-diethylaminomethyl)diethoxysilyl groups. Among these, dimethoxymethylsilyl groups are particularly preferred to achieve an excellent effect in preventing gelation of the B part during storage.

The polyoxyalkylene polymer (P) may be one that has more than one reactive silicon groups on average per terminal moiety or may be one that has one or less reactive silicon groups on average per terminal moiety. In terms of enhancing the ultimate strength of the resulting cured product, the polymer (P) preferably has more than one reactive silicon groups on average per terminal moiety. In terms of the stability of the B part, the polymer (P) preferably has one or less reactive silicon groups on average per terminal moiety. The lower limit of the number of the reactive silicon groups is not limited to a particular value. For example, the polymer (P) may have 0.1 or more reactive silicon groups on average per terminal moiety.

The average number of the reactive silicon groups per molecule of the polyoxyalkylene polymer (P) is not limited to a particular range. The average number may be, for example, from about 0.1 to 6 and is preferably from 0.3 to 5, more preferably from 0.3 to 2.5, and particularly preferably from 0.3 to 1.

The polyoxyalkylene polymer (P) is not limited to having a particular backbone, and specific examples of the backbone include those mentioned above as examples of the backbone of the polyoxyalkylene polymer (A). Among the examples mentioned above, polyoxypropylene is preferred. The backbone of the polyoxyalkylene polymer (P) may be linear or branched. In terms of the stability of the B part, the backbone of the polyoxyalkylene polymer (P) is preferably linear.

The number-average molecular weight and weight-average molecular weight of the polyoxyalkylene polymer (P) are not limited to particular ranges, and will not be described below as the discussion given above for the number-average molecular weight and weight-average molecular weight of the polyoxyalkylene polymer (A) applies to those of the polyoxyalkylene polymer (P).

The polyoxyalkylene polymer (P) can be produced by any known synthesis method. The main chain of the polyoxyalkylene polymer (P) may contain an ester bond or an amide segment represented by the formula (4) given above.

The amount of the polyoxyalkylene polymer (P) is preferably from 5 to 150 parts by weight, more preferably from 10 to 120 parts by weight, and particularly preferably from 20 to 100 parts by weight per 100 parts by weight of the polyoxyalkylene polymer (A).

### <<Silanol Condensation Catalyst (C)>>

A silanol condensation catalyst (C) can accelerate a condensation reaction of the reactive silicon groups of the polyoxyalkylene polymer (A). The silanol condensation catalyst (C) is contained in the A part. The silanol condensation catalyst (C) is contained in the A part. When the silanol condensation catalyst (C) is contained in the A part hydrolysis of the silanol condensation catalyst (C) can be inhibited, and the mixture of the A part and the B part can exhibit an initial strength in a better way after the mixing.

Examples of the silanol condensation catalyst (C) include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin bis(ethyl maleate), dioctyltin bis(octyl maleate), dioctyltin oxide, a reaction product of dibutyltin oxide and a silicate compound, a reaction product of dioctyltin oxide and a silicate compound, and a reaction product of dibutyltin oxide and a phthalic ester.

Specific examples of the metal carboxylate include tin carboxylate, bismuth carboxylate, titanium carboxylate, zirconium carboxylate, iron carboxylate, potassium carboxylate, and calcium carboxylate. The metal carboxylate may be a combination of any of carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-(o-tolyl)biguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other curing catalysts that can be used include fluorine anion-containing compounds, photoacid generators, and photobase generators.

Two or more different curing catalysts may be used in combination. For example, the combined use of the amine compound and carboxylic acid as mentioned above or of the amine compound and alkoxy metal as mentioned above can provide a reactivity-enhancing effect.

The amount of the silanol condensation catalyst (C) used is preferably from 0.001 to 20 parts by weight, more preferably from 0.01 to 15 parts by weight, and even more preferably from 0.01 to 10 parts by weight per 100 parts by weight of the polyoxyalkylene polymer (A) (or 100 parts by weigh of the total amount of the polyoxyalkylene polymer (A) and the (meth)acrylic ester polymer (B) in the case where the (meth)acrylic ester polymer (B) is used; the same applies hereinafter).

### <<Plasticizer (D)>>

The plasticizer (D) is preferably contained in the B part. The plasticizer (D) may be contained only in the B part or may be contained in both the A part and the B part. The presence of the plasticizer (D) allows the curable composition to have a low viscosity and be easy to handle. In particular, when the plasticizer (D) is contained in the B part, it is easy to mix the A part and the B part. In the case where the B part contains the polyoxyalkylene polymer (P), the B part need not contain the plasticizer (D).

Examples of the plasticizer (D) include, but are not limited to: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic acid phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil, epoxidized linseed oil, bis(2-ethylhexyl)-4,5-epoxycyclohexane-1,2-dicarboxylate (E-PS), epoxy octyl stearate, epoxy butyl stearate, and benzyl epoxystearate.

A polymeric plasticizer can also be used as the plasticizer (D). Specific examples of the polymeric plasticizer include: vinyl polymers; polyester plasticizers; polyether plasticizers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene.

Among the above plasticizers, the polymeric plasticizers are preferred. The polyether plasticizers are more preferred, and polypropylene glycol is particularly preferred.

One plasticizer may be used alone as the plasticizer (D), or a combination of two or more plasticizers may be used as the plasticizer (D).

The total amount of the plasticizer (D) is preferably from 5 to 150 parts by weight, more preferably from 10 to 120 parts by weight, and particularly preferably from 20 to 100 parts by weight per 100 parts by weight of the polyoxyalkylene polymer (A).

### <<Inorganic Filler (E)>>

The inorganic filler (E) is essentially contained in the B part. The inorganic filler (E) may be contained only in the B part or may be contained in both the A part and the B part. The presence of the inorganic filler (E) can increase the strength of the cured product. Being contained in the B part, the inorganic filler (E) contributes to improving the stability of the B part.

Examples of the inorganic filler (E) include, but are not limited to, ground calcium carbonate, colloidal calcium carbonate, magnesium carbonate, diatomite, clay, talc, titanium oxide, fumed silica, wet silica, crystalline silica, molten silica, silicic anhydride, hydrated silicic acid, alumina, carbon black, ferric oxide, aluminum fines, zinc oxide, activated zinc oxide, and glass fibers or filaments. Among these, calcium carbonate, fumed silica, wet silica, and titanium oxide are preferred.

One inorganic filler may be used alone as the inorganic filler (E), or a combination of two or more inorganic fillers may be used as the inorganic filler (E).

The total amount of the inorganic filler (E) is preferably from 1 to 300 parts by weight and more preferably from 10 to 250 parts by weight per 100 parts by weight of the polyoxyalkylene polymer (A).

In terms of improving the stability of the B part, the percentage of the inorganic filler (E) in the total amount of the B part is set to 10 wt% or more. If the percentage of the inorganic filler (E) is less than 10 wt%, the B part is unstable, and the polyoxyalkylene polymer (A) and/or the plasticizer (D) is likely to separate from the water (F) during storage of the B part. The percentage is preferably 15 wt% or more and more preferably 20 wt% or more. The percentage is preferably at most 60 wt%, more preferably 50 wt% or less, and even more preferably 40 wt% or less.

### <<Water (F)>>

The water (F) is contained in the B part. The presence of the water (F) accelerates a hydrolysis reaction of the reactive silicon groups of the polyoxyalkylene polymer (A) at the time of mixing of the A part and the B part, thus allowing the resulting mixture to exhibit an initial strength in a desired way. Since the water (F) is contained in the B part, reduction in the storage stability of the A part containing the polyoxyalkylene polymer (A) can be avoided.

The amount of the water (F) is preferably from 0.1 to 10 parts by weight, more preferably from 0.1 to 5 parts by weight, even more preferably from 0.1 to 3 parts by weight, and particularly preferably from 0.1 to 2.5 parts by weight per 100 parts by weight of the polyoxyalkylene polymer (A). If the water is added in excess of the above upper limit, the bond performance to a substrate could decline.

The percentage of the water (F) in the total amount of the B part is preferably from 0.5 to 30 wt%. When the percentage of the water (F) is in this range, mixing of the A part and the B part is easy. The percentage of the water (F) is preferably from 1 to 20 wt% and more preferably from 3 to 15 wt%.

### <<Fatty Acid Amide (G)>>

Preferably, the A part further contains a fatty acid amide (G) to achieve viscosity characteristics as described below. Fatty acid amide waxes can be used as the fatty acid amide (G), and they are commercially available as thixotropic agents, thickeners, anti-settling agents, anti-sagging agents, etc.

Commercially-available fatty acid amide waxes include a powdered product consisting only of a fatty acid amide wax component and a preswollen product in the form of a paste containing a fatty acid amide wax in a solvent. A product combining a fatty acid amide wax and another component having thixotropic properties may be used. Examples of commercially-available fatty acid amide waxes that can be used include DISPARLON^{™} manufactured by Kusumoto Chemicals, Ltd. and products of Arkema.

The amount of the fatty acid amide (G) is preferably from 0.1 to 15 parts by weight, more preferably from 0.5 to 10 parts by weight, even more preferably from 1 to 8 parts by weight, and particularly preferably from 2 to 6 parts by weight per 100 parts by weight of the polyoxyalkylene polymer (A).

### <<Additional Components>>

The curable composition may contain additional components in addition to the polyoxyalkylene polymer (A), the (meth)acrylic ester polymer (B), the polyoxyalkylene polymer (P), the silanol condensation catalyst (C), the plasticizer (D), the inorganic filler (E), the water (F), and the fatty acid amide (G), and examples of the additional components include an organic filler, an adhesion promoter, an anti-sagging agent, an antioxidant, a light stabilizer, an ultraviolet absorber, a tackifying resin, and another resin. Where necessary, various additives may be added to the curable composition in order to adjust the physical properties of the curable composition or cured product. Examples of the additives include a solvent, a diluent, a photocurable material, an oxygen-curable material, a surface modifier, a silicate, a curability modifier, a radical inhibitor, a metal deactivator, an antiozonant, a phosphorus-based peroxide decomposer, a lubricant, a pigment, a fungicide, a flame retardant, and a blowing agent.

### <Adhesion Promoter>

An adhesion promoter can be added to the curable composition.

A silane coupling agent or a reaction product of the silane coupling agent can be added as the adhesion promoter.

Specific examples of the silane coupling agent include: amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Condensation products of various silane coupling agents can also be used, and examples of the condensation products include a condensation product of an amino group-containing silane and a product of condensation of an amino group-containing silane with another alkoxysilane. Reaction products of various silane coupling agents can also be used, and examples of the reaction products include a reaction product of an amino group-containing silane and an epoxy group-containing silane and a reaction product of an amino group-containing silane and a (meth)acrylic group-containing silane.

One of the above adhesion promoters may be used alone, or two or more thereof may be used as a mixture. Reaction products of various silane coupling agents can also be used.

The amount of the adhesion promoter used is preferably from 0.1 to 20 parts by weight and more preferably from 0.5 to 10 parts by weight per 100 parts by weight of the polyoxyalkylene polymer (A).

### (Solvent and Diluent)

A solvent or diluent can be added to the curable composition. The solvent or diluent used is not limited to a particular compound, and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### <Anti-Sagging Agent>

Where necessary, an anti-sagging agent may be added to the curable composition to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the polyoxyalkylene polymer (A).

### <Antioxidant>

An antioxidant (anti-aging agent) can be used in the curable composition. The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are mentioned in Japanese Laid-Open Patent Application Publication No. H4-283259 and Japanese Laid-Open Patent Application Publication No. H9-194731.

The amount of the antioxidant used is preferably from 0.1 to 10 parts by weight and more preferably from 0.2 to 5 parts by weight per 100 parts by weight of the polyoxyalkylene polymer (A).

### <Light Stabilizer>

A light stabilizer can be used in the curable composition. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the polyoxyalkylene polymer (A).

### <Ultraviolet Absorber>

An ultraviolet absorber can be used in the curable composition. The use of an ultraviolet absorber can increase the surface weathering resistance of the cured product. Examples of the ultraviolet absorber include benzophenone, benzotriazole, salicylate, substituted acrylonitrile, and metal chelate compounds. Particularly preferred are benzotriazole compounds. Specific examples of the ultraviolet absorber include those sold under the trade names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and more preferably from 0.2 to 5 parts by weight per 100 parts by weight of the polyoxyalkylene polymer (A).

### (Property Modifier)

A property modifier may be added to the curable composition for the purpose of modifying the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition or conversely decrease the hardness and increase the elongation at break. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and more preferably from 0.5 to 5 parts by weight per 100 parts by weight of the polyoxyalkylene polymer (A).

### <Tackifying Resin>

A tackifying resin can be added, if necessary, to the curable composition for the purpose of increasing the bond performance or adhesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the polyoxyalkylene polymer (A).

### <<Curable Composition>>

The curable composition according to the present embodiment includes: the A part containing the polyoxyalkylene polymer (A), the acrylic ester polymer(B) as an optional component, the silanol condensation catalyst (C), the plasticizer (D) as an optional component, the inorganic filler (E) as an optional component, and any additional components; and the B part containing at least one of the polyoxyalkylene polymer (P) and the plasticizer (D), the inorganic filler (E), the water (F), and any additional components. The curable composition is preferably prepared as a multi-part curable composition the A and B parts of which are mixed before use.

The B part contains the polyoxyalkylene polymer (P) or the plasticizer (D) and may contain both the polyoxyalkylene polymer (P) and the plasticizer (D). When the B part contains the plasticizer (D) in combination with the polyoxyalkylene polymer (P), the stability of the B part containing the polyoxyalkylene polymer (P) can be improved. This effect is significant especially when the polyoxyalkylene polymer (P) used is a polymer that falls within the definition of the polyoxyalkylene polymer (A).

The viscosity of the A part, as measured using a rheometer at a temperature of 23°C and a shear rate of 5 × 10⁻³ (1/sec), is preferably 15,000 Pa•s or more. When the viscosity is in this range, the mixture of the A part and the B part can retain its shape after being applied to a substrate. The viscosity is more preferably 20,000 Pa•s or more, even more preferably 25,000 Pa•s or more, and particularly preferably 30,000 Pa•s or more. The upper limit of the viscosity is not limited to a particular value. For example, the viscosity may be 100,000 Pa•s or less or may be 70,000 Pa•s or less.

The viscosity of the B part, as measured using a rheometer at a temperature of 23°C and a shear rate of 5 × 10⁻³ (1/sec), is preferably 15,000 Pa•s or more. When the viscosity is in this range, the B part does not suffer separation between its components but exhibits high stability. The viscosity is more preferably 20,000 Pa•s or more, even more preferably 25,000 Pa•s or more, and particularly preferably 30,000 Pa•s or more. The upper limit of the viscosity is not limited to a particular value. For example, the viscosity may be 50,000 Pa•s or less or may be 40,000 Pa•s or less.

In terms of making it easy to mix the A part and the B part, the difference between the viscosities of the A part and the B part, as measured using a rheometer at a temperature of 23°C and a shear rate of 64 (1/sec), is preferably small. Specifically, when the higher of the viscosities of the A part and the B part as measured at a shear rate of 64 (1 /sec) and the lower of the measured viscosities are substituted into the expression [(higher viscosity - lower viscosity)/(higher viscosity)] × 100, the calculated value is preferably 50% or less. The calculated value is more preferably 40% or less, even more preferably 30% or less, and particularly preferably 20% or less.

When the curable composition according to the present embodiment is used, the mixture of the A part and the B part may be cured at room temperature or cured by heating. The heating temperature is not limited to a particular range, but is preferably 40°C or higher, more preferably 60°C or higher, and even more preferably 80°C or higher. However, if the heating temperature is 100°C or higher, the water in the B part evaporates, and the evaporation could cause formation of voids in the cured product. This is why the heating temperature is preferably lower than 100°C.

In preparation of the A part, it is preferable that a water-containing component should be dried to remove water before being blended with the other components or should be dehydrated by means such as pressure reduction while being blended and kneaded with the other components.

A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, silica gel, quicklime, or magnesium oxide. Alternatively, a small amount of isocyanate compound may be added to react the isocyanate group with water and thus accomplish dehydration. An oxazolidine compound such as 3-ethyl-2-methyl-2-(3-methylbutyl)-1,3-oxazolidine may be added to react the oxazolidine compound with water and thus accomplish dehydration.

The storage stability of the curable composition can be further improved by not only performing the drying/dehydration as described above but also adding a lower alcohol such as methanol or ethanol or an alkoxysilane compound. Examples of the alkoxysilane compound include methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane.

The amount of the dehydrating agent used, in particular the alkoxysilane compound, is preferably from 0.1 to 20 parts by weight and more preferably from 0.5 to 10 parts by weight per 100 parts by weight of the polyoxyalkylene polymer (A).

### <<Surface Treatment of Adherends>>

The curable composition according to the present embodiment can exhibit high bond performance to various adherends such as plastics, metals, and composites. When the curable composition is used as an adhesive for non-polar materials such as polypropylene or for engineering plastics having a rigid molecular chain such as polyphenylene sulfide, the adherends may be surface-treated beforehand by a known technique in order to enhance the bond performance to the adherends and achieve a stable bond strength. Examples of the surface treatment technique that can be used include sanding treatment, flame treatment, corona discharge, arc discharge, and plasma treatment. The plasma treatment is preferred since this technique causes little damage to the adherends and results in stable bond performance. The surface treatments are also effective to remove a mold release used in molding and remaining on the surfaces of the adherends.

The curable composition according to the present embodiment exhibits intended physical properties by undergoing a long curing (aging) step after joining of adherends and at the same time is characterized by quickly exhibiting a certain level of strength. Thus, the curable composition according to the present embodiment can be suitably used to join adherends together in a line production system for a continuous process.

The final curing (aging) step performed to allow the curable composition to exhibit the intended final physical properties is not limited to particular conditions. For example, the curing (aging) temperature is from 5 to 90°C, and the curing (aging) time is from 24 hours to 1 week.

### <<Applications>>

The curable composition is suitable for use as an adhesive composition and can be used, for example, as a sealing material for buildings, ships, automobiles, and roads. The curable composition can be used also as an adhesive for joining panels of buses, trailers, and railcars, as a pressure-sensitive adhesive, or as a waterproofing material. The curable composition can be suitably used also for joining of dissimilar materials such as aluminum-steel joining, steel-composite joining, or aluminum-composite joining. When dissimilar materials are joined, the joint is preferably covered by a sealer to prevent corrosion. The reactive silicon group-containing polymers as described herein can be used as the sealer. The curable composition is preferably used as an adhesive for automobile parts such as automobile panels, parts of large land vehicles such as trucks and buses, parts of railcars, parts of aircrafts, parts of ships, parts of electric machines, or various other mechanical parts.

### Examples

Hereinafter, the present invention will be described in more detail using examples. The examples given below are not intended to limit the present invention.

The number-average molecular weights mentioned in the examples are GPC molecular weights measured under the following conditions.
Delivery system: HLC-8120 GPC manufactured by Tosoh Corporation
Column: TSK-GEL H Type manufactured by Tosoh Corporation
Solvent: THF
Molecular weight: Polystyrene equivalent
Measurement temperature: 40°C

The terminal group equivalent molecular weights mentioned in the examples are molecular weights each of which was determined as follows: hydroxy and iodine values were measured, respectively, by the measurement method as specified in JIS K 1557 and the measurement method as specified in JIS K 0070, and the molecular weight was calculated based on the hydroxy and iodine values taking into account the architecture of the organic polymer (in particular, the degree of branching which depends on the polymerization initiator used).

For the polymers (Q) described in the examples, the average number of unsaturated carbon-carbon bonds introduced per terminal moiety was calculated by the following equation.

Average number of introduced unsaturated carbon-carbon bonds = [unsaturated group concentration (mol/g) of polymer (Q) as determined from iodine value - unsaturated group concentration (mol/g) of precursor polymer (P) as determined from iodine value]/[hydroxy group concentration (mol/g) of precursor polymer (P) as determined from hydroxy value]

For the polymers (A) described in the examples, the average number of silyl groups introduced per terminal moiety was calculated by NMR analysis.

### (Synthesis Example 1)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 28,500 (terminal group equivalent molecular weight of 17,700) and a dispersity Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 100 parts by weight of the polyoxypropylene having 2.0 unsaturated carbon-carbon bonds on average per terminal moiety was added 72 ppm of a platinum-divinyldisiloxane complex (isopropanol solution with a concentration of 3 wt% calculated as the platinum content), and 2.2 parts by weight of trimethoxysilane was slowly added dropwise under stirring. The liquid mixture was reacted at 90°C for 2 hours, after which trimethoxysilane remaining unreacted was distilled off under reduced pressure to give a reactive silicon group-containing linear polyoxypropylene polymer (A-1) having 1.6 trimethoxysilyl groups on average per terminal moiety, 3.2 trimethoxysilyl groups on average per molecule, and a number-average molecular weight of 28,500.

### (Synthesis Example 2)

Propylene oxide was polymerized using polyoxypropylene triol having a number-average molecular weight of about 3,000 as an initiator in the presence of a zinc hexacyanocobaltate-glyme complex catalyst. This polymerization yielded polyoxypropylene terminated by hydroxy groups and having a number-average molecular weight of 25,630 (terminal group equivalent molecular weight of 17,440) and a dispersity Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 100 parts by weight of the polyoxypropylene having 2.0 unsaturated carbon-carbon bonds on average per terminal moiety was added 72 ppm of a platinum-divinyldisiloxane complex (isopropanol solution with a concentration of 3 wt% calculated as the platinum content), and 2.9 parts by weight of trimethoxysilane was slowly added dropwise under stirring. The liquid mixture was reacted at 90°C for 2 hours, after which trimethoxysilane remaining unreacted was distilled off under reduced pressure to give a reactive silicon group-containing branched polyoxypropylene polymer (A-2) having 1.6 trimethoxysilyl groups on average per terminal moiety, 4.8 trimethoxysilyl groups on average per molecule, and a number-average molecular weight of 25,630.

### (Synthesis Example 3)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 28,500 (terminal group equivalent molecular weight of 17,700) and a dispersity Mw/Mn of 1.21. Sodium methoxide dissolved in methanol at a concentration of 28% was added in an amount of 1.2 molar equivalents per molar equivalent of the hydroxy groups of the hydroxy-terminated polyoxypropylene. After methanol was distilled off by evaporation under vacuum, 1.5 molar equivalents of allyl chloride was added per molar equivalent of the hydroxy groups of the hydroxy-terminated polyoxypropylene, and the reaction was allowed to proceed at 130°C for 2 hours. To 100 parts by weight of the unpurified, ally-terminated polyoxypropylene were added 300 parts by weight of *n*-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure.

To 100 parts by weight of the resulting polyoxypropylene was added 72 ppm of a platinum-divinyldisiloxane complex (isopropanol solution with a concentration of 3 wt% calculated as the platinum content), and 1.1 parts by weight of trimethoxysilane was slowly added dropwise under stirring. The liquid mixture was reacted at 90°C for 2 hours, after which trimethoxysilane remaining unreacted was distilled off under reduced pressure to give a reactive silicon group-containing linear polyoxypropylene polymer (P-1) having 0.8 trimethoxysilyl groups on average per terminal moiety, 1.6 trimethoxysilyl groups on average per molecule, and a number-average molecular weight of 28,500.

### (Synthesis Example 4)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 28,500 (terminal group equivalent molecular weight of 17,700) and a dispersity Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 100 parts by weight of the polyoxypropylene having 2.0 unsaturated carbon-carbon bonds on average per terminal moiety was added 36 ppm of a platinum-divinyldisiloxane complex (isopropanol solution with a concentration of 3 wt% calculated as the platinum content), and 1.9 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (P-2) having 1.6 dimethoxymethylsilyl groups on average per terminal moiety, 3.2 dimethoxymethylsilyl groups on average per molecule, and a number-average molecular weight of 28,500.

### (Synthesis Example 5)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 28,500 (terminal group equivalent molecular weight of 17,700) and a dispersity Mw/Mn of 1.21. Sodium methoxide dissolved in methanol at a concentration of 28% was added in an amount of 1.2 molar equivalents per molar equivalent of the hydroxy groups of the hydroxy-terminated polyoxypropylene. After methanol was distilled off by evaporation under vacuum, 1.5 molar equivalents of allyl chloride was added per molar equivalent of the hydroxy groups of the hydroxy-terminated polyoxypropylene, and the reaction was allowed to proceed at 130°C for 2 hours. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure.

To 100 parts by weight of the resulting polyoxypropylene was added 36 ppm of a platinum-divinyldisiloxane complex (isopropanol solution with a concentration of 3 wt% calculated as the platinum content), and 1.0 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (P-3) having 0.8 dimethoxymethylsilyl groups on average per terminal moiety, 1.6 dimethoxymethylsilyl groups on average per molecule, and a number-average molecular weight of 28,500.

### (Synthesis Example 6)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 14,600 (terminal group equivalent molecular weight of 9,100) and a dispersity Mw/Mn of 1.21. Sodium methoxide dissolved in methanol at a concentration of 28% was added in an amount of 1.2 molar equivalents per molar equivalent of the hydroxy groups of the hydroxy-terminated polyoxypropylene. After methanol was distilled off by evaporation under vacuum, 1.5 molar equivalents of allyl chloride was added per molar equivalent of the hydroxy groups of the hydroxy-terminated polyoxypropylene, and the reaction was allowed to proceed at 130°C for 2 hours. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure.

To 100 parts by weight of the resulting polyoxypropylene was added 36 ppm of a platinum-divinyldisiloxane complex (isopropanol solution with a concentration of 3 wt% calculated as the platinum content), and 1.7 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (P-4) having 0.75 dimethoxymethylsilyl groups on average per terminal moiety, 1.5 dimethoxymethylsilyl groups on average per molecule, and a number-average molecular weight of 14,600.

### (Synthesis Example 7)

Sodium methoxide dissolved in methanol at a concentration of 28% was added to polyoxypropylene glycol having a number-average molecular weight of about 4,800 (terminal group equivalent molecular weight of 3,000) and a dispersity Mw/Mn of 1.21 in an amount of 1.2 molar equivalents per molar equivalent of the hydroxy groups of the polyoxypropylene glycol. After methanol was distilled off by evaporation under vacuum, 1.5 molar equivalents of allyl chloride was added per molar equivalent of the hydroxy groups of the hydroxy-terminated polyoxypropylene, and the reaction was allowed to proceed at 130°C for 2 hours. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure.

To 100 parts by weight of the resulting polyoxypropylene was added 36 ppm of a platinum-divinyldisiloxane complex (isopropanol solution with a concentration of 3 wt% calculated as the platinum content), and 3.8 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (P-5) having 0.25 dimethoxymethylsilyl groups on average per terminal moiety, 0.5 dimethoxymethylsilyl groups on average per molecule, and a number-average molecular weight of 4,800.

### (Synthesis Example 8)

Propylene oxide was polymerized using butanol as an initiator in the presence of a zinc hexacyanocobaltate-glyme complex catalyst to yield polyoxypropylene oxide having a number-average molecular weight of 7,800 (terminal group equivalent molecular weight of 5,000) and a dispersity Mw/Mn of 1.21. Sodium methoxide dissolved in methanol at a concentration of 28% was added in an amount of 1.2 molar equivalents per molar equivalent of the hydroxy groups of the hydroxy-terminated polyoxypropylene. After methanol was distilled off by evaporation under vacuum, 1.5 molar equivalents of allyl chloride was added per molar equivalent of the hydroxy groups of the hydroxy-terminated polyoxypropylene, and the reaction was allowed to proceed at 130°C for 2 hours. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure.

To 100 parts by weight of the resulting polyoxypropylene was added 36 ppm of a platinum-divinyldisiloxane complex (isopropanol solution with a concentration of 3 wt% calculated as the platinum content), and 1.6 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (P-6) terminated at only one end by a dimethoxymethylsilyl group and having 0.8 dimethoxymethylsilyl groups on average per molecule and a number-average molecular weight of 7,800.

### (Example 1)

To 100 parts by weight of the reactive silicon group-containing polyoxypropylene polymer (A-1) obtained in Synthesis Example 1 were added 1 part by weight of NOCRAC CD (antioxidant manufactured by Ouchi Shinko Chemical Industrial Co., Ltd.) serving as a stabilizer, 1 part by weight of ADK STAB AO-60 (antioxidant manufactured by Adeka Corporation) serving as a stabilizer, 13 parts by weight of ACTCOL P-23 (polypropylene glycol manufactured by Mitsui Chemicals, Inc.) serving as the plasticizer (D), 40 parts by weight of CCR-S10 (colloidal calcium carbonate manufactured by Shiraishi Kogyo Kaisha, Ltd.) serving as the filler (E), 0.05 parts by weight of Asahi Thermal (carbon black manufactured by Asahi Carbon Co., Ltd.) serving as the filler (E), and 2.5 parts by weight of Crayvallac SL (fatty acid amide wax manufactured by Arkema) serving as a rheology control agent. The polymer and the added components were mixed using a planetary mixer, and the mixture was dehydrated by heating under reduced pressure at 120°C for 1 hour. The resulting composition was cooled and mixed with 3 parts by weight of A-171 (vinyltrimethoxysilane manufactured by Momentive Performance Materials) serving as a dehydrating agent, 2 parts by weight of KBM-603 (N-(2-aminoethyl)-3-aminopropyltrimethoxysilane manufactured by Shin-Etsu Chemical Co., Ltd.) serving as an adhesion promoter, and 0.2 parts by weight of NEOSTANN U-810 (dioctyltin dilaurate manufactured by Nitto Kasei Co., Ltd.) serving as the silanol condensation catalyst (C). In this way, an A part was obtained.

Next, 10.3 parts by weight of polypropylene glycol having a number-average molecular weight of 14,600 and serving as the plasticizer (D), 1.3 parts by weight of CCR-S10 (colloidal calcium carbonate manufactured by Shiraishi Kogyo Kaisha, Ltd.) serving as the filler (E), 1.2 parts by weight of AEROSIL R-202 (hydrophobic fumed silica manufactured by Nippon Aerosil Co., Ltd.) serving as the filler (E), 2 parts by weight o R-820 (titanium oxide manufactured by Ishihara Sangyo Kaisha, Ltd.) serving as the filler (E), and 1.5 parts by weight of the water (F) were mixed using a planetary mixer to obtain a B part.

### (Viscosity)

The viscosities of the A and B parts obtained as above were measured. Parallel disc plates with a diameter of 20 mm were used as jigs, and the gap between the plates was set to 0.3 mm. The measurement was performed at a temperature of 23°C and shear rates of 5 × 10⁻³ (1/sec) and 64 (1/sec). The device used was a rheometer (DHR-2) manufactured by TA Instruments. The results obtained are shown in Table 1.

### (Stability of B Part)

A sample bottle was filled with the B part obtained as above and allowed to stand at 40°C for 2 weeks, after which whether water separated from the other components was visually checked. The term "Stable" is used to indicate that the separation did not occur, while the term "Separated" is used to indicate that the separation occurred. The result is shown in Table 1.

### (Mixing Method)

A cartridge for two part mixing (manufactured by Nordson Corporation) was filled with the A and B parts prepared in Example 1 at a weight ratio or volume ratio A part:B part of 10:1. The A and B parts were mixed using a static mixer having a series of 24 elements with an element diameter of 10 mm to obtain a mixture.

### (Skinning Time)

In an atmosphere with a temperature of 23°C and a relative humidity of 50%, an about 5-mm-thick mold was filled with the mixture by means of a spatula, and the surface of the mixture was flattened. The moment at which the surface flattening was completed was defined as a curing start time. The time taken for the composition to become non-sticky to the spatula touching the surface of the composition was determined as the skinning time. In this manner, the curing time was measured. The result is shown in Table 1.

### (Pot Life)

To determine the pot life of the mixture, the viscosity of the mixture was measured using a rheometer. Parallel disc plates with a diameter of 20 mm were used as jigs, and the gap between the plates was set to 0.3 mm. The measurement was performed at a temperature of 23°C and a shear rate of 10 (1/sec). The time taken for the viscosity to increase to twice the initial viscosity was determined as the pot life. The device used was a rheometer (DHR-2) manufactured by TA Instruments. The result is shown in Table 1.

### (Shear Test (After 30 Minutes))

Steel plates (SS400) were used as adherends. The steel plates were polished with sandpaper #400 and degreased with heptane. The mixture was applied to one of the adherends, and then the other adherend was immediately bonded to the one adherend in such a manner that the bonding area was 25 mm × 12.5 mm and the thickness of the mixture between the adherends was 0.5 mm. The moment at which the adherends were bonded together was defined as a start time, and the adherends were left at 23°C and 50% RH for 30 minutes. After that, shear bond strength measurement was conducted at a test speed of 10 mm/min. The result is shown in Table 1.

### (Example 2)

A and B parts were prepared and subjected to the various tests in the same manner as those in Example 1, except that the reactive silicon group-containing polyoxypropylene polymer (A-1) obtained in Synthesis Example 1 was replaced with the reactive silicon group-containing polyoxypropylene polymer (A-2) obtained in Synthesis Example 2 and that the components and their proportions were changed as shown in Table 1. The results are shown in Table 1.

### (Examples 3 to 5)

A and B parts were prepared and subjected to the various tests in the same manner as those in Example 2, except that the reactive silicon group-containing polyoxypropylene polymers (P-4) to (P-6) obtained in Synthesis Examples 6 to 8 were used in place of the polypropylene glycol used as the plasticizer (D) in Example 2. The results are shown in Table 1.

### (Comparative Examples 1 to 3)

A and B parts were prepared and subjected to the various tests in the same manner as those in Example 1, except that the reactive silicon group-containing polyoxypropylene polymer (A-1) obtained in Synthesis Example 1 was replaced with the reactive silicon group-containing polyoxypropylene polymers (P-1) to (P-3) obtained in Synthesis Examples 3 to 5 and that the components and their proportions were changed as shown in Table 1. The results are shown in Table 1. In Comparative Examples 2 and 3, NEOSTANN S-1 (dioctyltin bistriethoxysilicate manufactured by Nitto Kasei Co., Ltd.) was used as the silanol condensation catalyst (C).

**[Table 1]**

| Components and proportions (parts by weight) | | | Ex. 1 | Ex. 2 | Ex. 3 | Ex. 4 | Ex. 5 | Comp. 1 | Comp. 2 | Comp. 3 |
|---|---|---|---|---|---|---|---|---|---|---|
| A part | Polyoxyalkylene polymer (A) | A-1 | 100 | | | | | | | |
| | | A-2 | | 100 | 100 | 100 | 100 | | | |
| | Polyoxyalkylene polymer (P) | P-1 | | | | | | 100 | | |
| | | P-2 | | | | | | | 100 | |
| | | P-3 | | | | | | | | 100 |
| | Stabilizer | NOCRAC CD | 1 | 1 | 1 | 1 | 1 | 1 | 1 | 1 |
| | | ADK STAB AO-60 | 1 | 1 | 1 | 1 | 1 | 1 | 1 | 1 |
| | Plasticizer (D) | ACTCOL P-23 | 13 | 10 | 10 | 10 | 10 | 13 | 9 | 9 |
| | Inorganic filler (E) | CCR-S10 | 40 | 40 | 40 | 40 | 40 | 40 | 40 | 40 |
| | | Asahi Thermal | 0.05 | 0.05 | 0.05 | 0.05 | 0.05 | 0.05 | 0.05 | 0.05 |
| | Rheology control agent | Cray vallac SL | 2.5 | 2 | 2 | 2 | 2 | 2.5 | 3 | 3 |
| | Dehy drating agent | A-171 | 3 | 3 | 3 | 3 | 3 | 3 | 2 | 2 |
| | Adhesion promoter | KBM-603 | 2 | 2 | 2 | 2 | 2 | 2 | 3 | 3 |
| | Silanol condensation catalyst (C) | NEOSTANN U-810 | 0.2 | 0.2 | 0.2 | 0.2 | 0.2 | 0.6 | | |
| | | NEOSTANN S-1 | | | | | | | 2.5 | 2.5 |
| | Total parts by weight of A part | | 162.75 | 159.25 | 159.25 | 159.25 | 159.25 | 163.15 | 161.55 | 161.55 |
| B part | Plasticizer (D) | Polypropylene glycol | 10.3 | 10.3 | | | | 10.3 | 10.1 | 10.1 |
| | Polyoxyalkylene polymer (P) | P-4 | | | 10.3 | | | | | |
| | | P-5 | | | | 10.3 | | | | |
| | | P-6 | | | | | 10.3 | | | |
| | Inorganic filler (E) | CCR-S10 | 1.3 | 3.1 | 3.1 | 3.1 | 3.1 | 1.3 | 2.5 | 2.5 |
| | | AEROSIL R-202 | 1.2 | 0.6 | 0.6 | 0.6 | 0.6 | 1.2 | 1.2 | 1.2 |
| | | R-820 | 2 | 2 | 2 | 2 | 2 | 2 | 2 | 2 |
| | Water (F) | | 1.5 | 1.5 | 1.5 | 1.5 | 1.5 | 1.5 | 1.5 | 1.5 |
| | Total parts by weight of B part | | 16.3 | 17.5 | 17.5 | 17.5 | 17.5 | 16.3 | 17.3 | 17.3 |
| A:B (weight ratio) | | | 10:1 | 10:1 | 10:1 | 10:1 | 10:1 | 10:1 | 9.2:1 | 9.2:1 |
| Viscosity of A part (Pass) | | Viscosity at 64 (1/sec) | 88 | 51 | 51 | 51 | 51 | 88 | 107 | 107 |
| Viscosity of B part (Pass) | | Viscosity at 0.005 (1/sec) | 27280 | 25250 | 25250 | 25250 | 25250 | 27280 | 29300 | 29300 |
| | | Viscosity at 64 (1/sec) | 55 | 42 | 46 | 13 | 27 | 55 | 60 | 60 |
| Percentage of inorganic filler (E) in B part | | (wt%) | 28 | 33 | 33 | 33 | 33 | 28 | 33 | 33 |
| Stability of B part | | - | Stable | Stable | Stable | Stable | Stable | Stable | Stable | Stable |
| Skinning time | | (min) | 12 | 12 | 12 | 11 | 12 | 19 | 10 | 24 |
| Pot life | | (min) | 7.2 | 5.3 | 5.2 | 5.1 | 5.5 | 8.4 | 4.3 | 15.7 |
| Pot life/skinning time | | - | 60% | 44% | 43% | 46% | 46% | 44% | 43% | 65% |
| Shear test after 30 minutes | | Shear strength (MPa) | 0.4 | 0.5 | 0.5 | 0.5 | 0.5 | 0.1 | 0.1 | 0.05 |

For the multi-part curable compositions of Examples 1 to 5 in which the polyoxyalkylene polymer (A) having more than one reactive silicon groups on average per terminal moiety was used and in which the reactive silicon groups were trimethoxysilyl groups, Table 1 reveals that the proportion of the time determined as the pot life to the skinning time was high and that the initial strength was exhibited in a desired way as demonstrated by a high shear strength as measured 30 minutes after the bonding of the adherends. The above results show that in the case of the multi-part curable compositions of Examples 1 to 5, the mixture of the main part and the auxiliary part remained usable for a long period of time after mixing of the main part and the auxiliary part and exhibited a sufficient initial strength quickly. It is also seen that Example 1, in which the main chain structure of the polyoxyalkylene polymer (A) used was linear, was superior to the other Examples in that the mixture of the main part and the auxiliary part remained usable for a significantly long period of time after mixing of the main part and the auxiliary part.

In contrast, the multi-part curable composition of Comparative Example 1, in which a polyoxyalkylene polymer having one or less reactive silicon groups on average per terminal moiety was used in the A part, exhibited an insufficient shear strength as measured 30 minutes after the bonding of the adherends.

The multi-part curable composition of Comparative Example 2, in which the reactive silicon groups of the polyoxyalkylene polymer contained in the A part were dimethoxymethylsilyl groups, also exhibited an insufficient shear strength as measured 30 minutes after the bonding of the adherends.

Additionally, the multi-part curable composition of Comparative Example 3, in which a polyoxyalkylene polymer having one or less reactive silicon groups on average per terminal moiety was used in the A part and in which the reactive silicon groups were dimethoxymethylsilyl groups, also exhibited an insufficient shear strength as measured 30 minutes after the bonding of the adherends.

### (Examples 6 and 7 and Comparative Examples 4 and 5)

B parts were prepared in the same manner as that in Example 1, except that the components and their proportions were changed as shown in Table 2.

### (Stability of B Part)

A sample bottle was filled with each of the B parts obtained as above and allowed to stand at 40°C for 2 weeks, after which whether water separated from the other components was visually checked. The term "Stable" is used to indicate that the separation did not occur, while the term "Separated" is used to indicate that the separation occurred. The results are shown in Table 2.

### (Viscosity)

The viscosity of each of the B parts obtained as above was measured. Parallel disc plates with a diameter of 20 mm were used as jigs, and the gap between the plates was set to 0.3 mm. The measurement was performed at a temperature of 23°C and shear rates of 5 × 10⁻³ (1/sec) and 64 (1/sec). The device used was a rheometer (DHR-2) manufactured by TA Instruments. The results obtained are shown in Table 2.

**[Table 2]**

| Components and proportions (parts by weight) | | | Ex. 6 | Ex. 7 | Comp. 4 | Comp. 5 |
|---|---|---|---|---|---|---|
| B part | Polyoxy alkylene polymer (A) | A-1 | | 33.0 | | |
| | Plasticizer (D) | Polypropylene glycol | 65.2 | 33.0 | 82.3 | 90.5 |
| | Inorganic filler (E) | CCR-S10 | 19.0 | 19.0 | | |
| | | AEROSIL R-202 | 6.3 | 5.5 | 8.2 | |
| | Water (F) | | 9.5 | 9.5 | 9.5 | 9.5 |
| | Total parts by weight of B part | | 100.0 | 100.0 | 100.0 | 100.0 |
| Percentage of inorganic filler (E) in B part | | (wt%) | 25 | 25 | 8 | 0 |
| Stability of B part | | - | Stable | Stable | Separated | Separated |
| Viscosity (Pa•s) 23°C | | Viscosity at 0.005 (1/sec) | 44250 | 29940 | 11660 | 6.0 |
| | | Viscosity at 64 (1/sec) | 45 | 65 | 18 | 5.8 |

Table 2 reveals that the stability of the B part was high enough in Example 6 or 7 in which the content of the inorganic filler (E) was 10 wt% or more, while in Comparative Example 4 or 5 in which the content of the inorganic filler (E) was less than 10 wt%, the stability of the B part was insufficient.

## Claims

1. A multi-part curable composition comprising:
an A part; and
a B part, wherein
the A part comprises a polyoxyalkylene polymer (A) having more than one reactive silicon groups on average per terminal moiety of the polyoxyalkylene polymer (A), the reactive silicon groups being represented by the following formula (1): -SiX₃ (1), wherein X is a hydroxy group or a hydrolyzable group,
the A part further comprises a silanol condensation catalyst (C),
the B part comprises: at least one of a polyoxyalkylene polymer (P) having a reactive silicon group and a plasticizer (D); an inorganic filler (E); and water (F), and
a percentage of the inorganic filler (E) in a total amount of the B part is 10 wt% or more.

2. The multi-part curable composition according to claim 1, wherein the polyoxyalkylene polymer (A) comprises a main chain structure that is linear.

3. The multi-part curable composition according to claim 1 or 2, wherein the reactive silicon group of the polyoxyalkylene polymer (P) is a dimethoxymethylsilyl group.

4. The multi-part curable composition according to any one of claims 1 to 3, wherein the percentage of the inorganic filler (E) in the total amount of the B part is 60 wt% or less.

5. The multi-part curable composition according to any one of claims 1 to 4, wherein a percentage of the water (F) in the total amount of the B part is from 0.5 to 30 wt%.

6. The multi-part curable composition according to any one of claims 1 to 5, wherein a viscosity of the B part, as measured using a rheometer at a shear rate of 5 × 10⁻³ (1/sec), is 15,000 Pa•s or more.

7. The multi-part curable composition according to any one of claims 1 to 6, wherein viscosities of the A part and the B part, as measured using a rheometer at a shear rate of 64 (1/sec), satisfy the following relationship: (higher viscosity - lower viscosity)/(higher viscosity) × 100 ≤ 50%, wherein the higher viscosity is the higher of the viscosities of the A part and the B part and the lower viscosity is the lower of the viscosities of the A part and the B part.

8. The multi-part curable composition according to any one of claims 1 to 7, wherein the terminal moiety of the polyoxyalkylene polymer (A) comprises a structure represented by the following formula (2): 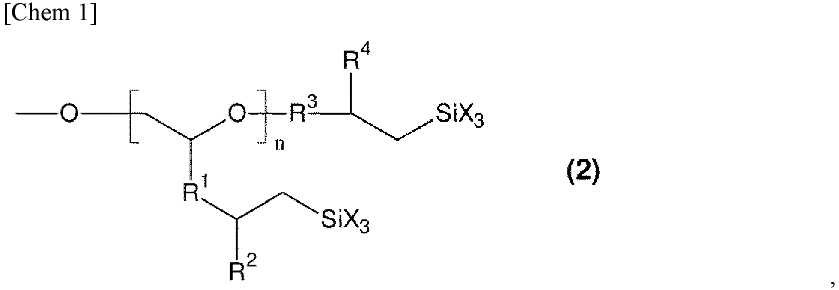 wherein R¹ and R³ are each independently a divalent linkage group having 1 to 6 carbon atoms, atoms of R¹ and R³ that are attached to carbon atoms adjacent to R¹ and R³ are each independently carbon, oxygen, or nitrogen, R² and R⁴ are each independently hydrogen or a hydrocarbon group having 1 to 10 carbon atoms, n is an integer from 1 to 10, and X is a hydroxy group or a hydrolyzable group.

9. The multi-part curable composition according to any one of claims 1 to 8, wherein the multi-part curable composition is a two-part curable composition consisting of the A part and the B part.

10. A cured product obtained by curing a mixture of the A part and the B part of the multi-part curable composition according to any one of claims 1 to 9.

## Patentansprüche

1. Eine mehrteilige härtbare Zusammensetzung, umfassend:
einen A-Teil; und
einen B-Teil, wobei
der A-Teil ein Polyoxyalkylenpolymer (A) umfasst, welches im Durchschnitt mehr als eine reaktive Siliciumgruppe pro endständiger Einheit des Polyoxyalkylenpolymers (A) aufweist, wobei die reaktiven Siliciumgruppen durch die folgende Formel (1) dargestellt sind: -SiX₃ (1), wobei X eine Hydroxygruppe oder eine hydrolisierbare Gruppe ist,
der A-Teil ferner einen Silanol-Kondensationskatalysator (C) umfasst,
der B-Teil umfasst: mindestens eines aus einem Polyoxyalkylenpolymer (P) mit einer reaktiven Siliciumgruppe und einem Weichmacher (D); einen anorganischen Füllstoff (E); und Wasser (F), und
ein prozentualer Anteil des anorganischen Füllstoffs (E) an einer Gesamtmenge des B-Teils 10 Gew.-% oder mehr beträgt.

2. Die mehrteilige härtbare Zusammensetzung gemäß Anspruch 1, wobei das Polyoxyalkylenpolymer (A) eine lineare Hauptkettenstruktur umfasst.

3. Die mehrteilige härtbare Zusammensetzung gemäß Anspruch 1 oder 2, wobei die reaktive Siliciumgruppe des Polyoxyalkylenpolymers (P) eine Dimethoxymethylsilylgruppe ist.

4. Die mehrteilige härtbare Zusammensetzung gemäß einem der Ansprüche 1 bis 3, wobei der prozentuale Anteil des anorganischen Füllstoffs (E) an der Gesamtmenge des B-Teils 60 Gew.-% oder weniger beträgt.

5. Die mehrteilige härtbare Zusammensetzung gemäß einem der Ansprüche 1 bis 4, wobei ein prozentualer Anteil des Wassers (F) an der Gesamtmenge des B-Teils 0,5 bis 30 Gew.-% beträgt.

6. Die mehrteilige härtbare Zusammensetzung gemäß einem der Ansprüche 1 bis 5, wobei eine Viskosität des B-Teils, gemessen unter Verwendung eines Rheometers bei einer Schergeschwindigkeit von 5 × 10⁻³ (1/s), 15.000 Pa•s oder mehr beträgt.

7. Die mehrteilige härtbare Zusammensetzung gemäß einem der Ansprüche 1 bis 6, wobei die Viskositäten des A-Teils und des B-Teils, gemessen unter Verwendung eines Rheometers bei einer Schergeschwindigkeit von 64 (1/s), die folgende Beziehung erfüllen: (höhere Viskosität - niedrigere Viskosität)/(höhere Viskosität) × 100 ≤ 50 %, wobei die höhere Viskosität die höhere der Viskositäten von Teil A und Teil B ist und die niedrigere Viskosität die niedrigere der Viskositäten von Teil A und Teil B ist.

8. Die mehrteilige härtbare Zusammensetzung gemäß einem der Ansprüche 1 bis 7, wobei die endständige Einheit des Polyoxyalkylenpolymers (A) eine Struktur umfasst, welche durch die folgende Formel (2) dargestellt ist: 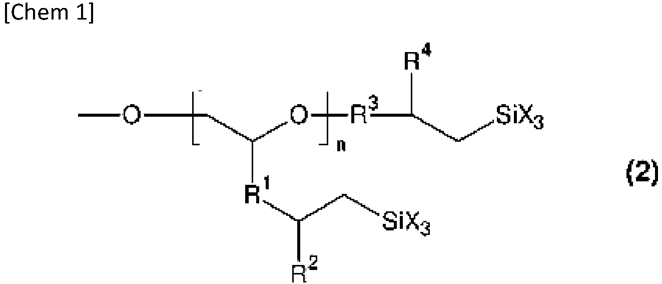 wobei R¹ und R³ jeweils unabhängig eine zweiwertige Verbindungsgruppe mit 1 bis 6 Kohlenstoffatomen darstellen, die Atome von R¹ und R³, welche an benachbart liegende Kohlenstoffatome von R¹ und R³ gebunden sind, jeweils unabhängig Kohlenstoff, Sauerstoff oder Stickstoff sind, R² und R⁴ jeweils unabhängig Wasserstoff oder eine Kohlenwasserstoffgruppe mit 1 bis 10 Kohlenstoffatomen sind, n eine ganze Zahl von 1 bis 10 ist und X eine Hydroxygruppe oder eine hydrolisierbare Gruppe ist.

9. Die mehrteilige härtbare Zusammensetzung gemäß einem der Ansprüche 1 bis 8, wobei die mehrteilige härtbare Zusammensetzung eine zweiteilige härtbare Zusammensetzung ist, welche aus dem A-Teil und dem B-Teil besteht.

10. Ein gehärtetes Produkt, welches durch Härten eines Gemisches aus dem A-Teil und dem B-Teil der mehrteiligen härtbaren Zusammensetzung gemäß einem der Ansprüche 1 bis 9 erhalten wird.

## Revendications

1. Composition durcissable en plusieurs parties comprenant :
une partie A ; et
une partie B, dans laquelle
la partie A comprend un polymère polyoxyalkylène (A) ayant plus qu'un groupe silicone réactif en moyenne par motif terminal du polymère polyoxyalkylène (A), les groupes silicone réactifs étant représentés par la formule (1) suivante : -SiX₃ (1), dans laquelle X est un groupe hydroxy ou un groupe hydrolysable,
la partie A comprend en outre un catalyseur de condensation de silanol (C),
la partie B comprend : au moins l'un parmi un polymère polyoxyalkylène (P) ayant un groupe silicone réactif et un plastifiant (D) ; une charge inorganique (E) ; et de l'eau (F), et
le pourcentage de la charge inorganique (E) dans la quantité totale de la partie B est de 10 % en poids ou plus.

2. Composition durcissable en plusieurs parties selon la revendication 1, dans laquelle le polymère polyoxyalkylène (A) comprend une structure de chaîne principale qui est linéaire.

3. Composition durcissable en plusieurs parties selon la revendication 1 ou 2, dans laquelle le groupe silicone réactif du polymère polyoxyalkylène (P) est un groupe diméthoxyméthylsilyle.

4. Composition durcissable en plusieurs parties selon l'une quelconque des revendications 1 à 3, dans laquelle le pourcentage de la charge inorganique (E) dans la quantité totale de la partie B est de 60 % en poids ou moins.

5. Composition durcissable en plusieurs parties selon l'une quelconque des revendications 1 à 4, dans laquelle le pourcentage de l'eau (F) dans la quantité totale de la partie B est de 0,5 à 30 % en poids.

6. Composition durcissable en plusieurs parties selon l'une quelconque des revendications 1 à 5, dans laquelle la viscosité de la partie B, telle que mesurée au moyen d'un rhéomètre à une vitesse de cisaillement de 5 × 10⁻³ (1/s), est de 15 000 Pa·s ou plus.

7. Composition durcissable en plusieurs parties selon l'une quelconque des revendications 1 à 6, dans laquelle les viscosités de la partie A et de la partie B, telles que mesurées au moyen d'un rhéomètre à une vitesse de cisaillement de 64 (1/s), satisfont la relation suivante : (viscosité plus élevée - viscosité plus basse) / (viscosité plus élevée) × 100 ≤ 50 %, dans laquelle la viscosité plus élevée est la plus élevée parmi les viscosités de la partie A et de la partie B, et la viscosité plus basse est la plus basse parmi les viscosités de la partie A et de la partie B.

8. Composition durcissable en plusieurs parties selon l'une quelconque des revendications 1 à 7, dans laquelle le motif terminal du polymère polyoxyalkylène (A) comprend une structure représentée par la formule (2) suivante : 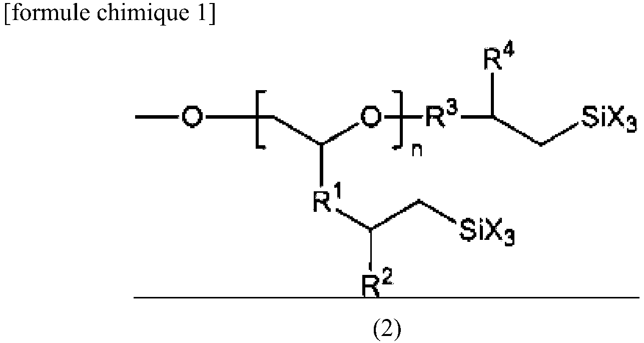 dans laquelle chacun de R¹ et R³ est indépendamment un groupe de liaison divalent ayant 1 à 6 atomes de carbone, chacun des atomes de R¹ et R³ qui sont rattachés à des atomes de carbone adjacents à R¹ et R³ est indépendamment le carbone, l'oxygène ou l'azote, chacun de R² et R⁴ est indépendamment l'hydrogène ou un groupe hydrocarboné ayant 1 à 10 atomes de carbone, n est un entier de 1 à 10, et X est un groupe hydroxy ou un groupe hydrolysable.

9. Composition durcissable en plusieurs parties selon l'une quelconque des revendications 1 à 8, laquelle composition durcissable en plusieurs parties est une composition durcissable en deux parties consistant en la partie A et la partie B.

10. Produit durci obtenu par durcissement d'un mélange de la partie A et de la partie B de la composition durcissable en plusieurs parties selon l'une quelconque des revendications 1 à 9.
